# EUROPEAN PATENT APPLICATION

(11) **EP 4 375 049 A1**
(43) Date of publication of application: **29.05.2024**
(21) Application number: 22208982.3
(22) Date of filing: 23.11.2022
(51) Int. Cl.: B29C 64/00, B29D 11/00, G02C 1/00, G02B 27/01, F21V 8/00, B33Y 80/00

(54) **A THREE-DIMENSIONAL OPTICAL STRUCTURE AND A METHOD FOR PRODUCING A THREE-DIMENSIONAL OPTICAL STRUCTURE**

(71) Applicant: Meta Platforms Technologies, LLC, Menlo Park, CA 94025 (US)
(72) Inventor: van den Bergh, John-John, 5656 AE Eindhoven (NL)
(74) Representative: Murgitroyd & Company

(57) **Abstract**

A three-dimensional optical structure, in particular a lens assembly, is proposed, wherein the optical structure comprises a first element, a second element and an air gap arranged between the first element and the second element, characterized in that the first element and/or the second element comprises on a surface thereof facing the air gap a plurality of three-dimensionally printed strut structures for spacing the first element and the second element from each other.

## Description

### BACKGROUND

The present invention relates to a three-dimensional optical structure, for example a lens assembly, wherein the optical structure comprises a first element, a second element and an air gap arranged between the first element and the second element. Such optical structures are well-known, e.g. as lens assemblies for spectacles or displays. Light may travel more or less perpendicularly through the optical structure, i.e. through the first element, the air gap and the second element, while at the same time light may propagate (e.g. by means of total reflection) within the air gap.

The first and second element may both be lenses (or lens parts) or the first element may e.g. be a lens part or a part of a display or a waveguide and the second element may be a (another) waveguide or a cover glass thereof. Through the air gap, information, such as an artificial image, may be coupled into the optical structure. Such optical structures are particularly useful in augmented or virtual reality applications.

It is important that the air gap is maintained even when external forces are applied to the optical structure. For example, a user may exert - intentionally or accidentally - pressure on the optical structure, thus deforming the first element and/or the second element, which results in the air gap being reduced. Hence, if enough force is applied to the optical structure, the first and second element may come into contact, which may result in a deterioration of the optical quality of the optical structure or may even damage the optical structure.

It is therefore known, e.g. from prior art documents US 2014/168260 A1 or US 9213178 B1, to include spacer elements within the air gap which maintain a distance between the first element and the second element, e.g. between a lens part and a waveguide.

Such known spacer elements are relatively large and additionally the spacer element may be formed of another material than the first element and/or the second element, e.g. a rubberlike material to provide for partially elastic spacer elements. In case of a multitude of spacer elements, they may be arranged in a pattern. This is disadvantageous as the human eye is highly perceptible to patterns, which may negatively impact the use of the optical structure. Furthermore, the known approaches could result in spacers being located at the optical center of a lens. This is disadvantageous as spacers are more visible for the user at this location. Additionally, optical aberrations may be introduced by the material, shape, size and location of the spacer elements.

In recent years, with the rise of rapid prototyping and in particular additive manufacturing, it has become clear that optical structures can easily be produced by additive manufacturing. Not only is additive manufacturing an easy way to finely tune optical functions of the optical structures during the production process, but the optical structures may also be specially adapted for the integration of functional components such as e.g. waveguides and/or displays.

One known method of additive manufacturing is three-dimensional printing. The known methods of three-dimensional printing usually comprise a print head with at least one nozzle ejecting droplets of printing ink towards a substrate. By depositing a multitude of droplets, a layer is created. The printing ink solidifies and the process may be repeated to deposit multiple layers. Hence, any printed structure is at least roughly the size of one droplet of printing ink. Yet, this is too big for a spacer element such as described above and a spacer element produced by known methods of three-dimensional printing will negatively impact the optical properties of the optical structure and possibly be optically discernible for a user. Therefore, known spacer elements are usually produced by other techniques.

### SUMMARY

Hence, it is a purpose of the present invention to provide a three-dimensional optical structure with spacer elements which avoid the above-described disadvantages, i.e. in particular which do not negatively impact the optical quality of the optical structure, which are not discernible for a user and which reliably maintain a distance between the first element and the second element. It is furthermore a purpose of the present invention to provide an easy and reliable method to produce such an optical structure.

According to an aspect of the present invention, there is provided a three-dimensional optical structure, wherein the optical structure comprises a first element, a second element and an air gap arranged between the first element and the second element, wherein the first element and/or the second element comprises on a surface thereof facing the air gap, a plurality of three-dimensionally printed strut structures for spacing the first element and the second element from each other.

Optionally, the optical structure is a lens assembly.

The optical structure according to the invention advantageously provides an optical structure comprising an air gap which is stable, even when external forces are applied, wherein the strut structures are easily producible even in small enough sizes such that they substantially do not impact the optical properties of the optical structure.

The embodiments and advantages described in conjunction with this subject-matter of the present invention also apply to the further subject-matter of the present invention and vice versa.

Within the context of the present invention, a strut structure is optionally comparable to a spacer element in that its purpose is to space the first element and the second element from each other. The strut structures are produced by means of three-dimensional printing, which is an additive manufacturing technique wherein droplets of printing ink are ejected from at least one nozzle of a print head. In the context of the present invention, printing of an optical structure preferably comprises building up the structure from droplets of printing ink and more preferably from layers of printing ink. These layers are obtained through a targeted placement of droplets of printing ink at least partially side by side according to predetermined print data. The print data preferably comprises slicing data, wherein optionally, a predetermined shape of the optical structure is converted into print data by dividing it into a plurality of layers, i.e. slices, which are at least partially stacked upon each other. Preferably, during printing of the at least one layer, the droplets are deposited at least partially side by side and preferably at least partially on top of each other, wherein preferably successive layers of printing ink are a least partially printed one above the other in consecutive printing steps.

The deposited droplets are preferably pin cured, i.e. at least partially cured. More preferably, the viscosity of the printing ink is increased during curing. Pin curing is most preferably carried out after deposition of the respective droplet or after deposition of an entire (sub)layer or only part of a layer. Alternatively, pin curing is carried out at certain intervals, e.g. after printing of every second (sub)layer. Preferably, curing may comprise actively and/or passively curing the printing ink, wherein passively curing may include letting the droplets dry or cure, i.e. generally speaking solidify, over time, whereas actively curing may include acting upon the deposited droplets, e.g. submitting the droplets to additional energy such as electromagnetic radiation, in particular UV and/or IR light, and/or thermal energy, in particular heat.

Preferably, the optical structure is a three-dimensional structure intended to at least partially transmit light. The optical structure is more preferably intended for use with the visible spectrum. Preferably, the optical structure is at least partially optically translucent and/or transparent, preferably at least for a predetermined range of wavelengths, such as the visible spectrum. The optical structure may be a lens and even more preferably an ophthalmic lens. Ophthalmic lenses comprise concave, convex, biconcave, biconvex, plano-concave, plano-convex and meniscus lenses. Ophthalmic lenses in the sense of the present invention also comprise multifocal lenses as well as gradient-index lenses. Ophthalmic lenses comprise in particular spectacle lenses or other lenses that are used in eyewear. Alternatively or additionally, the optical structure may comprise a display and/or a waveguide. E.g., the optical structure comprises a lens assembly comprising a waveguide such that light passes through the optical structure, preferably into the eye on a user, while at the same time, light may be coupled in, more preferably through a waveguide, even more preferably laterally, wherein the optical structure is preferably arranged such that this coupled-in light reaches the eye of the user as well. In this way, it is advantageously possible that an artificial image is provided to the user such that it is superposed with the image of the outside world, as perceived through the optical structure.

Preferably, the printing ink comprises a translucent or transparent component. More preferably, the printing ink comprises at least one photo-polymerizable component. The at least one photo-polymerizable component is most preferably a monomer that polymerizes upon exposure to radiation, e.g. ultra-violet (UV) light.

Within the context of the present invention, the air gap may comprise substantially any shape and/or form. It is essential that the first element is notably distanced from the second element. E.g. the air gap may substantially comprise the form of a cuboid although different shapes are possible as well. Preferably, the surface of the first element facing the air gap and/or the surface of the second element facing the air gap is substantially planar. More preferably, at least one of the surfaces may be at least partially curved. Even more preferably, the air gap comprises a substantially constant thickness. This means that - disregarding the strut structures - the distance between the first element and the second element maintained by the air gap is preferably constant over its (lateral) extension, at least if external forces are not applied.

According to a preferred embodiment of the present invention, the air gap is substantially enclosed within the optical structure. This means that there is preferably substantially no opening connecting the air gap to the environment surrounding the optical structure. This is particularly advantageous since in this way, the air gap is encapsuled and protected from contamination and/or damage from outside influences.

According to a preferred embodiment of the present invention and preferably additionally or alternatively to the above-described embodiment, the air gap comprises at least one lateral opening. Within the context of the present invention, the orientation of the air gap is preferably defined by the surface facing the air gap of the first element and/or the second element. The opening does preferably not extend through one of those surfaces, but rather extends in the same plane as the air gap. The opening may be realized through a lack of material between the first element and the second element but it may also extend at least partially through the first element, the second element and/or an additional enclosure enclosing at least partially the first element and/or the second element. It is herewith advantageously possible to provide a well-defined access to the air gap, e.g. for coupling light into the air-gap and/or for elements extending into the air gap.

According to a preferred embodiment of the present invention, the strut structures are printed at predetermined locations, wherein preferably the strut structures are printed according to a predetermined distribution, wherein preferably the distribution is a homogenous distribution in a predetermined region of the air gap. This advantageously allows for predetermined optical properties of the optical structure. Generally speaking, all elements of the optical structure influence the path and/or the properties of light passing through the optical structure. Even though the strut structures may be provided with such small sizes that they substantially do not impact the optical properties of the optical structures, they may cause small optical aberrations. By producing the strut structures at predetermined locations, such aberrations may be predicted, calculated and compensated, thus advantageously enhancing the optical properties of the optical structure.

According to a preferred embodiment of the present invention, the strut structures are not printed according to any discernible pattern, wherein the strut structures are preferably printed according to a predetermined distribution. More preferably, the predetermined distribution is a random and/or a homogenous distribution. Even more preferably, a discernible pattern encompasses any pattern which is discernible by a human user and/or a pattern discernible by any means, i.e. any kind of structured pattern. The exact positions of the strut structures may be calculated, by a controller of a three-dimensional printing system configured for producing the optical structure according to the present invention such that the strut structures are randomly arranged over a predetermined region of the air gap. Yet, the predetermined locations of the strut structures are preferably well-defined in order for the printer to print the strut structures. It is herewith particularly advantageously possible to avoid regular patterns of the strut structures, which may be detected by the human eye, while at the same time allowing for a stable and reliable spacing of the first element and the second element over substantially the entire extension of the air gap and while furthermore allowing for a precise knowledge of the location of the strut structures such that possible resulting aberrations may be compensated accordingly. By precisely controlling the locations of the strut structures, the light loss from the air gap can be minimized and hence the efficiency of the optical structure, in particular the waveguide, is increased.

According to a preferred embodiment of the present invention, the first element and/or the second element is produced by means of additive manufacturing, preferably three-dimensional printing and/or injection-molding. The first element or the second element may be three-dimensionally printed, which advantageously allows for a very precise production with controlled optical properties, while the respective other of the second element or the first element is more easily produced by means of e.g. injection-molding. This is particularly advantageous if the first element and the second element are functionally different elements, e.g. if the first element is a lens or at least a part of a lens, and the second element is e.g. a lens blank, a waveguide and/or part of a display. Thus, in an advantageous manner, the respective advantages of different additive manufacturing techniques may be combined.

According to a preferred embodiment of the present invention, the strut structures are formed integrally with the first element and/or the second element. This advantageously allows for an easy and quick way of producing the optical structure. The person skilled in the art understands that since according to the present invention the strut structures are produced by means of three-dimensional printing, the first element and/or the second element respectively may be produced by means of three-dimensional printing as well.

According to a preferred embodiment of the present invention, the strut structures comprise the same material as the first element and/or the second element. Preferably, the strut structures are produced with the same printing ink as the first element and/or the second element. Herewith, it is advantageously possible to produce the optical structure more quickly because the printing ink does not need to be changed. Additionally, boundary effects such as reflection at the transition from the first and/or second element to the strut structures may advantageously be avoided or at least minimized.

According to an alternative preferred embodiment of the present invention, the strut structures comprise a material having a higher glass transition temperature, preferably after curing, than the material of the first element and/or the second element. The person skilled in the art acknowledges that a material having a higher glass transition temperature is a harder or more robust material. It is thus advantageously possible to provide more robust strut structures. Because the strut structures are more robust, their size may at the same time be reduced without reducing the stability as well. It is thus advantageously possible to minimize optical effects caused by the strut structures while maintaining the structural stability of the air gap.

According to a preferred embodiment of the present invention, the optical structure comprises a substantially circumferential spacer structure along the outer perimeter of the air gap for spacing the first element and the second element from each other. Preferably, the spacer structure is three-dimensionally printed. This means that in the outer region of the air gap a spacer structure is provided which further maintains the distance between the first element and the second element. More preferably, the spacer structure comprises a width, which is substantially higher than a width of a strut structure. Because the spacer structure is provided in the outer region of the air gap, it is advantageously possible to use a relatively broad and therefore more robust spacer structure without impacting the optical properties of the optical structure too much. It is herewith advantageously possible to use fewer strut structures or strut structures of relatively smaller sizes as the circumferential spacer structure provides stability. Preferably, "substantially circumferential" means that there may be relatively small regions in which no spacer structure is present. This is e.g. the case of a lateral opening of the air gap.

According to a preferred embodiment of the present invention, the strut structures are formed from an optically transparent material. Additionally or alternatively, the strut structures are formed from an optically translucent material. It is thus advantageously possible to maintain the optical transparency and/or translucency of the entire optical structure.

According to a preferred embodiment of the present invention, the first element and/or the second element comprises a lens, a waveguide and/or a glass substrate. Preferably, a glass substrate encompasses a cover glass of a waveguide or a display as well. More preferably, "lens" is meant to encompass also a part of a lens, e.g. a lens half. Thus, the air gap may be provided e.g. between two parts, for example halves, of a lens and/or within components of a display and/or between a lens (part) and a waveguide. Preferably, the first element and/or the second element comprises glass and/or a polymer, preferably cellulose triacetate (TAC), cyclic olefin copolymer (COC), polyethylene terephthalate (PET), polycarbonate (PC) and/or Polymethyl methacrylate (PMMA), which is also known as acrylic glass or plexiglass. Those materials are well-known and tested materials for optical purposes and therefore particularly suited for the production of the optical structure according to the present invention.

Preferably, the optical structure comprises more than one air gap. The optical structure may e.g. comprise a lens wherein a waveguide is inserted within the lens and an air gap is provided between the upper part of the lens and the waveguide and another air gap is provided between the waveguide and the lower part of the lens. More preferably, the optical structure comprises two or more waveguides. Even more preferably, an air gap is provided between the upper part of the lens and a first waveguide, another air gap is provided between a first waveguide and a second waveguide, and still another air gap is provided between the second waveguide and the lower part of the lens.

According to a preferred embodiment of the present invention, the strut structures comprise a height between 1 µm and 200 µm, wherein the height preferably corresponds to the height of the air gap. It is thus advantageously possible that a single strut structure spans the entire distance between the first element and the second element, i.e. the height of the air gap. The term height is in this context preferably meant to denote the shortest possible distance between the first element and the second element across the air gap. Preferably this distance is perpendicular on the surface facing the air gap of the first element and/or perpendicular on the surface facing the air gap of the second element. The inventors have found that a distance of at least 1 µm is required to obtain a sufficient optical isolation. The person skilled in the art understands that for a relatively low density of strut structures, the height of the strut structures is relatively higher in order to ensure that even under pressure the first element does not contact the second element, whereas for a relatively high density of strut structures, the height of each strut structures may be relatively low, because all forces acting upon the first and/or second element are distributed over a higher number of strut structures.

According to a preferred embodiment of the present invention, the strut structures comprise a height-to-width ratio between 0.2 and 3. The inventors have found that this ratio is surprisingly advantageous in that it offers good stability and minimal impact on the optical properties.

According to a preferred embodiment of the present invention, at least one strut structure comprises a shape such that optical distortions caused by the strut structures are minimized.

Preferably all strut structures comprise a shape such that optical distortions caused by the strut structures are minimized. The person skilled in the art understands that depending on the specific circumstances such as e.g. the location, the properties of the first element and/or the second element, the properties of the light, the strut structure density and/or the arrangement of the air gap, the optimal shape of the strut structures may vary.

According to a preferred embodiment of the present invention, at least one strut structure comprises a width, which is constant over their vertical extension or wherein at least one strut structure comprises a continuously varying width. More preferably, the width continuously increases from the contact point between the strut structure and the surface of the first element towards the contact point between the strut structure and the surface of the second element or vice versa. Because at one interface (between the strut structures and the first element or the second element) the contact surface is minimal, light-loss is advantageously minimized and consequently the efficiency of light traveling through the air gap is maximized, while at the same time the increasing width towards the other contact surface advantageously ensures sufficient stability.

According to a preferred embodiment of the present invention, at least one strut structure comprises a rotationally symmetric shape, preferably relative to a central axis. Preferably, the central axis runs through the middle of the strut structure and is preferably parallel to the height of the air gap. An example for such a rotationally symmetric shape is e.g. a cylindrical shape and/or a dome-like shape. Such a rotationally symmetric shape is particularly advantageous since it does not introduce additional optical aberrations and offers equal stability in all directions.

According to a preferred embodiment of the present invention, the first element and/or the second element comprises on its surface facing the air gap an anti-reflective structure and/or an anti-reflective coating. Preferably, the anti-reflective structure and/or the anti-reflective coating is printed, i.e. produced by means of three-dimensional printing. More preferably, the anti-reflective coating comprises a substantially uniform thickness, preferably the anti-reflective coating comprises a constant thickness over its entire lateral extension. This is particularly advantageous, because in this way, the anti-reflective coating does not substantially influence the optical properties of the optical structure. Preferably, the anti-reflective coating and/or the anti-reflective structure comprises a textured surface. More preferably, the textured surface is configured such as to reduce reflections of irradiation, for example light, incident on the textured surface. It is known that a textured coating may be used to reduce reflections, e.g. so called "moth-eye" antireflective textures. Preferably, such a textured surface comprises e.g. wrinkles, elevations and/or depressions. Preferably, the size of the textured surface is smaller than a predetermined wavelength. More preferably, the textured surface acts like a gradient-index film and thus reduces reflections. It is herewith advantageously possible to enhance the light-guiding properties of the air gap and thus the optical properties of the optical structure.

According to a preferred embodiment of the present invention, the air gap comprises a, preferably central, strut-structure-free region. This means optionally that in a predetermined region of the air gap, no strut structures are printed. Preferably, this region comprises less than 50% of the surface of the air gap, more preferably less than 10% and yet more preferably less than 5%. Even more preferably, the strut-structure-free region coincides with the position of the pupil of a user, the so-called "eye box". It is herewith advantageously possible to provide a region in which no strut structures are located and hence a user is prevented from noticing the strut structures thus enhancing the perceived optical quality of the optical structure, because in some regions, strut structures may decrease the efficiency of a light guiding element much more than in other regions. Therefore, the density of strut structures can be optimized in predetermined regions to minimize loss of light in the light guiding element and hence increase efficiency.

According to a further aspect of the present invention there is provided a method for producing a three-dimensional optical structure according to the present invention, wherein in a first step a substrate is provided, wherein the substrate comprises a surface being structured such as to correspond to a negative imprint of the surface facing the air gap of the first element, wherein in a second step the first element is printed on the substrate by depositing at least one layer of printing ink deposited through targeted placement of droplets of printing ink at least partially side by side and/or at least partially on top of each other, wherein in a third step the first element is removed from the substrate after curing and preferably turned, by 180°, wherein in a fourth step the second element is placed on the first element such that an air gap is created by means of the strut structures spacing the first element and the second element from each other.

The embodiments and advantages described in conjunction with this subject-matter of the present invention also apply to the further subject-matter of the present invention and vice versa.

It is hence advantageously possible to produce an optical structure comprising an air gap with strut structures as spacers by means of three-dimensional printing. As mentioned initially, due to the small sizes of the strut structures (few micrometers), it hadn't been possible previously to produce such strut structures by means of three-dimensional printing. According to this subject-matter of the present invention, the first element is printed together with the strut structures, i.e. the strut structures are formed integrally with the first element by applying a mold-like approach to three-dimensional printing. The substrate comprising the negative form of the strut structures and at least the surface of the first element may advantageously be produced by any appropriate means, e.g. injection-molding. By providing the substrate with the negative form/imprint, the location, sizes and/or shapes of the strut structures are well-defined so that possible optical aberrations resulting from the strut structures are known a priori and can preferably be compensated accordingly. Yet, by printing the first element and the strut structures, their exact shape, size, form and/or surface structurization may advantageously be precisely controlled and their optical properties can be exactly determined and adjusted, e.g. by choosing an appropriate printing ink.

Preferably the method further comprises a fifth step, in which the first element and the second element are at least partially bonded directly or indirectly with each other. More preferably, a direct bonding means that the first element and the second element are directly connected with each other, e.g. by means of an adhesive layer or any other form of positive-locking/interlocking, force-fitting and/or bonded connection. Even more preferably, an indirect bonding means that the first element and the second element are held together by a third element, preferably an enclosure, wherein the third element is connected with the first element and the second element respectively by means of a positive-locking/interlocking, force-fitting and/or bonded connection. Preferably, the fifth step comprises at least partially closing the air gap.

According to a preferred embodiment of this subject-matter of the present invention, between the third step and the fourth step an anti-reflective coating and/or at least one anti-reflective structure is printed in at least a region of the surface of the first element. Preferably, the anti-reflective coating comprises a substantially uniform thickness, for example the anti-reflective coating comprises a constant thickness over its entire lateral extension. This is particularly advantageous, because in this way, the anti-reflective coating does not substantially influence the optical properties of the optical structure. Preferably, the anti-reflective coating and/or the anti-reflective structure is printed such that it comprises a textured surface.

Optionally, the anti-reflective coating and/or the anti-reflective structure is an anti-reflective texture. More preferably, the textured surface is configured such as to reduce reflections of irradiation, for example light, incident on the textured surface. It is known that a textured coating may be used to reduce reflections, e.g. so called "moth-eye" antireflective textures. Preferably, such a textured surface comprises e.g. wrinkles, elevations and/or depressions. Preferably, the size of the textured surface is smaller than a predetermined wavelength. More preferably, the textured surface acts like a gradient-index film and thus reduces reflections. It is herewith advantageously possible to enhance the light-guiding properties of the air gap and thus the optical properties of the optical structure.

According to a preferred embodiment of this subject-matter of the present invention, the substrate is structured such that the first element comprises an anti-reflective structure in at least a region of its surface. This means preferably that the substrate comprises on its surface a negative structure such that when the first element is printed, an anti-reflective structure is automatically created, i.e. a negative imprint of the anti-reflective structure. Preferably, the anti-reflective structure is provided such that it comprises a textured surface. More preferably, the textured surface is configured such as to reduce reflections of irradiation, for example light, incident on the textured surface. It is known that a textured coating may be used to reduce reflections, e.g. so called "moth-eye" antireflective textures. Preferably, such a textured surface comprises e.g. wrinkles, elevations and/or depressions. Preferably, the size of the textured surface is smaller than a predetermined wavelength. More preferably, the textured surface acts like a gradient-index film and thus reduces reflections. It is herewith advantageously possible to enhance the light-guiding properties of the air gap and thus the optical properties of the optical structure.

According to a preferred embodiment of this subject-matter of the present invention, the substrate is provided with a negative imprint of a spacer structure and/or an enclosure. It is thus advantageously possible to produce further functional elements at the same time and/or in the same step of printing the first element. Preferably, the substrate comprises further negative forms and/or imprints for creating additional functional elements. More preferably, the substrate comprises at least two different negative imprints, wherein the structural size of the negative imprints is different. It is thus advantageously possible to realize different functional elements in one printing step although the sizes of the functional elements may differ substantially. E.g.. the strut structures usually comprise sizes on the micrometer scale, whereas typical anti-reflective structures, such as anti-reflective textures, comprise sizes on the nanometer scale. Other functional elements are e.g. spacer structures and/or rim structures, preferably for holding and/or clamping a waveguide. Such spacer structures and/or rim structure more preferably comprise sizes on the micrometer and/or millimeter scale.

According to a further aspect of the present invention there is provided a method for producing a three-dimensional optical structure according to the present invention, wherein in a first step the first element is produced by means of additive manufacturing, optionally by means of three-dimensional printing and/or injection-molding, wherein in a second step template structures are produced at predetermined locations on a surface of the first element by means of three-dimensional printing through targeted placement of droplets of printing ink, wherein the predetermined locations correspond to the locations of the strut structures, wherein in an optional third step at least one smoothing layer is printed at least on top of the template structures such that the strut structures are formed, wherein in a fourth step the second element is placed on the first element such that an air gap is created by means of the strut structures spacing the first element and the second element from each other.

The embodiments and advantages described in conjunction with this subject-matter of the present invention also apply to the further subject-matter of the present invention and vice versa.

It is hence advantageously possible to provide an alternative, easy, quick and reliable method for producing an optical structure according to the present invention. According to this subject-matter, the strut structures are immediately printed, without having to provide a substrate as a mediate step. Yet, as mentioned initially, this poses the problem that the optimal sizes for the strut structures of several micrometers are too small for conventional three-dimensional printing techniques. This is advantageously avoided by first printing template structures and subsequently printing smoothing layers such that the resulting strut structure comprises the desired and predetermined size and/or shape. By printing at least one smoothing layer, the resulting structural sizes are diminished in comparison to the initial template structure. Hence, smaller structural sizes are obtainable.

Preferably, before the fourth step, the first element is turned, by 180°, and more preferably placed on a holder. This allows for a particularly reliable and easy way to assemble the optical structure, by placing the second element on the strut structures.

Preferably the method further comprises a fifth step, in which the first element and the second element are at least partially bonded directly or indirectly with each other. More preferably, a direct bonding means that the first element and the second element are directly connected with each other, e.g. by means of an adhesive layer or any other form of positive-locking/interlocking, force-fitting and/or bonded connection. Even more preferably, an indirect bonding means that the first element and the second element are held together by a third element, preferably an enclosure, wherein the third element is connected with the first element and the second element respectively by means of a positive-locking/interlocking, force-fitting and/or bonded connection. Preferably, the fifth step comprises at least partially closing the air gap.

According to a preferred embodiment of this subject-matter of the present invention, after the third step an anti-reflective coating and/or at least one anti-reflective structure is printed in at least a region of the surface of the first element. Preferably, the anti-reflective coating comprises a uniform thickness, for example the anti-reflective coating comprises a constant thickness over its entire lateral extension. This is particularly advantageous, because in this way, the anti-reflective coating does not substantially influence the optical properties of the optical structure. Preferably, the anti-reflective coating and/or the anti-reflective structure comprises a textured surface. More preferably, the textured surface is configured such as to reduce reflections of irradiation, for example light, incident on the textured surface. It is known that a textured coating may be used to reduce reflections, e.g. so called "moth-eye" antireflective textures. Preferably, such a textured surface comprises e.g. wrinkles, elevations and/or depressions. Preferably, the size of the textured surface is smaller than a predetermined wavelength. More preferably, the textured surface acts like a gradient-index film and thus reduces reflections. It is herewith advantageously possible to enhance the light-guiding properties of the air gap and thus the optical properties of the optical structure.

According to a preferred embodiment of this particular subject-matter of the present invention, during the second step and/or in an additional step, at least one further template structure is printed such that it yields a spacer structure and/or an enclosure, preferably after printing a smoothing layer on top of the further template structure. It is thus advantageously possible to easily produce further functional elements such as a spacer structure and/or an enclosure. Preferably, as such functional elements do usually comprise larger structure sizes than the strut structures, the optional step of printing a smoothing layer on top of the further template structure is not required. This means that the at least one further template structure corresponds to the spacer structure, the enclosure and/or still another functional element.

According to a preferred embodiment of this subject-matter of the present invention, the strut structures are produced at predetermined locations, preferably according to a random and/or homogenous distribution. This advantageously allows for predetermined optical properties of the optical structure. Generally speaking, all elements of the optical structure influence the path and/or the properties of light passing through the optical structure. Even though the strut structures may be provided with such small sizes that they substantially do not impact the optical properties of the optical structures, they may cause small optical aberrations. By producing the strut structures at predetermined locations, such aberrations may be taken into account and compensated, thus advantageously enhancing the optical properties of the optical structure. It is important to note that a random distribution may preferably at the same time be a predetermined and/or a homogenous distribution. The exact positions of the strut structures may be calculated, preferably by a controller such that the strut structures are randomly arranged over a predetermined region of the air gap. Yet, the predetermined locations of the strut structures are preferably well-defined. It is herewith particularly advantageously possible to avoid regular patterns of the strut structures which may be detected by the human eye, while at the same time allowing for a stable and reliable spacing of the first element and the second element over substantially the entire extension of the air gap and while furthermore allowing for a precise knowledge of the location of the strut structures such that possible resulting aberrations may be compensated accordingly. Furthermore, by exactly positioning the strut structures, light loss out of the air gap can be minimized to increase the efficiency of a light guiding element, such as a waveguide.

According to a preferred embodiment of this or the previous subject-matter of the present invention, before the fourth step, a substantially circumferential spacer structure is printed at least partially along the outer perimeter of the air gap for spacing the first element and the second element from each other. Preferably, the spacer structure also connects the first element and the second element. The spacer structure may extend along the entire circumference or may comprise an opening such as to provide a (lateral) opening for the air gap. It is thus advantageously possible to provide a more large-scale spacer structure in order to support the spacing between the first element and the second element without substantially impair the optical properties of the optical structure because the spacer structure is arranged at the periphery of the air gap. Preferably, the spacer structure is printed as a longitudinally extending rim or bead.

### BRIEF DESCRIPTION OF THE DRAWINGS

- **Figure 1**: shows a schematical cross section of an optical structure according to an advantageous embodiment of the present invention.
- **Figure 2**: shows a cross section of an optical structure according to an advantageous embodiment of the present invention.
- **Figure 3**: shows a schematic cross section of a strut structure in an air gap according to an advantageous embodiment of the present invention.
- **Figure 4**: shows a schematic lateral cross section of an optical structure according to an advantageous embodiment of the present invention.
- **Figure 5**: shows a schematical cross section of an optical structure according to a further advantageous embodiment of the present invention.
- **Figure 6**: shows a schematical cross section of an optical structure according to another advantageous embodiment of the present invention.

### DETAILED DESCRIPTION

The present invention will be described with respect to a particular embodiment and with reference to the drawing, but the invention is not limited thereto but only limited by the claims. The drawing described herein is only schematic and are non-limiting. In the drawing, the sizes may be exaggerated and non-proportional and may not be drawn to scale for illustrative purposes.

Where an indefinite or definite article is used when referring to a singular noun, e.g. "a", "an", "the", this includes a plural of that noun unless something else is specifically stated.

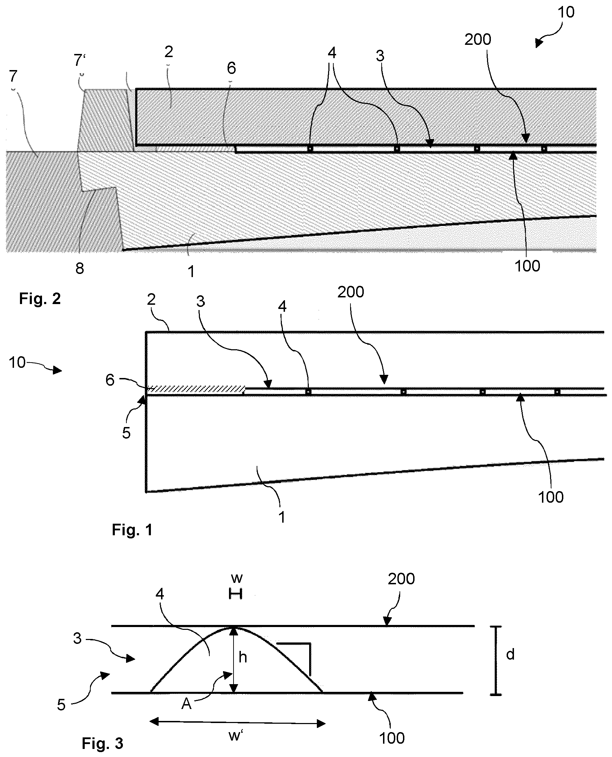

In **Figure 1****,** a schematical cross section of an optical structure 10 according to an advantageous embodiment of the present invention is depicted. The optical structure 10 may be any kind of optical structure, i.e. any structure that is used for optical purposes. In the present case, the optical structure 10 comprises a first element 1, here the lower element, which is a lens part, and a second element 2, here the upper element, which is a glass substrate, e.g. a cover glass of a display or a waveguide. Yet, this is merely an exemplary embodiment and the optical structure 10 according to the present invention or in particular the first element 1 and the second element 2 may be any other optical structure and/or optical component. The main purpose of the optical structure 10 is preferably to transmit light through the first element 1 and the second element 2. On its way, the light may, e.g., be focused, refracted, diffracted and/or polarized. The optical structure 10 and in particular the first element 1 and/or the second element 2 may be an ophthalmic lens which is used for correcting the vision of a user. In this case, the light is primarily transmitted through the optical structure 10 into the eye of a user.

The first element 1 and/or the second element 2 is preferably produced by means of additive manufacturing, in particular injection-molding and/or three-dimensional printing. Printing systems used for this technique are well known and are therefore not shown within the drawings or explained in detail. Such a printing system usually comprises a printer, e.g. a multi-jet inkjet printer, with at least a print head comprising at least one nozzle, preferably a plurality of nozzles, at least one reservoir for holding and providing a printing ink and a controller for controlling at least the print head according to predetermined printing data. Such printing data may e.g. comprise slicing data. This means that a desired, i.e. predetermined, final shape of the first element 1 and/or the second element 2 is determined and subsequently virtually sliced into layers, wherein the controller controls the print head such as to subsequently build up those layers by ejecting droplets of printing ink from the nozzle(s) along a predetermined trajectory and depositing these droplets of printing ink at least partially side by side. Subsequent layers are deposited in a similar manner at least partially on top of the previous layer.

The printing ink preferably comprises a photo-polymerizable monomer, which may be cured by irradiation, e.g. by ultraviolet (UV) light, infrared (IR) light and/or heat. Curing will initiate polymerization of the monomer and hence cause solidification. According to the specific layer shape and/or the specific requirements, a curing step can be performed after depositing a droplet, after depositing a layer, after depositing parts of a layer and/or after depositing multiple layers.

A well-known three-dimensional printing technique, which may be used within the context of the present invention is multi-pass printing. In a multi-pass printing mode, a layer is divided into sublayers. During each pass of the print head (e.g. a movement in one linear direction, wherein preferably moving back in the opposite direction constitutes another pass), a sublayer is printed. Thus, a layer is printed in multiple substeps, wherein during each substep, a sublayer is printed. Each sublayer may be cured after printing or a curing step is performed after a predetermined number of substeps.

It is known to provide spectacles with additional functionalities. For example, additional information may be provided to the user, e.g. artificial images may be projected into the user's eye. To this end, the optical structure 10 comprises an air gap 3 between the first element 1 and the second element 2. Yet, such an air gap 3 needs to reliably space the first element 1 from the second element 2 over the entire extension of the air gap 3. If e.g. the user presses the lens between her/his fingers, the air gap 3 may be reduced and if sufficient force is exerted, the first element 1 may even come into contact with the second element 2, thus impairing the functionality of the lens and potentially even damaging it.

In order to avoid this, a spacer element 6 may be provided along the periphery of the air gap 3 such that it spaces the first element 1 from the second element 2. Such a spacer element 6 is preferably produced by three-dimensional printing and may preferably additionally firmly connect the first element 1 and the second element 2 with each other. The spacer element 6 may continuously extend along the entire circumference of the air gap 3, or it may be interrupted in at least one region. In this way, the air gap 3 may comprise an opening to the side, i.e. a lateral opening 5, through which e.g. light may be coupled into the air gap 3.

Yet, such a spacer element 6 does only reliably prevent contact between the first element 1 and the second element 2 near the circumference, i.e. along the periphery of the air gap 3. In particular if the air gap 3 is comparably large, a central region of the air gap 3 may not be sufficiently protected. E.g. the air gap 3 may substantially extend over the entire width of a spectacle lens, i.e. over a width of ca. 50 mm.

For this reason, the optical structure 10 according to the present invention comprises a plurality of strut structures 4, which are arranged within the air gap 3 and preferably extend from the surface 100 of the first element 1 facing the air gap 3 to the surface 200 of the second element 2 facing the air gap 3. This means that the strut structures act as additional singular spacing components for spacing the first element 1 from the second element 2 and maintain the structural integrity of the air gap 3 even when forces are applied to the first element 1 and/or the second element 2. According to the present invention, these strut structures are printed, i.e. they are produced by means of three-dimensional printing.

It is generally desirable to provide e.g. a spectacle lens with a minimal thickness for convenience and/or comfort for the user. Hence, the distance between the first element 1 and the second element 2, corresponding to the height d of the air gap 3, should be minimal as well. This consequently means that the strut structure 4 need to be of very small sizes as well. In order to maintain sufficient optical isolation, a minimal height d of the air gap, which is preferably equal to the height h of the strut structures, is about 1 µm. Preferably, the height h and/or the distance d is smaller than 200 µm as shown in Fig.3.

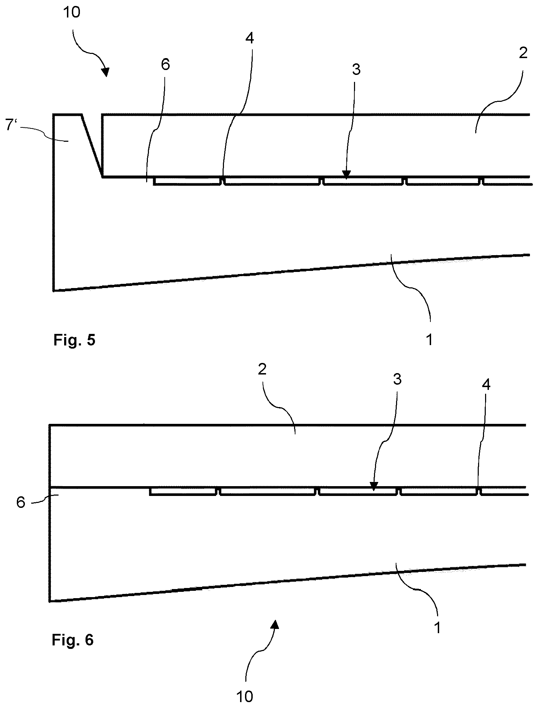

Due to the small size of the struct structures 4, it has proven challenging to produce them by means of three-dimensional printing, which is generally more suitable for larger structural sizes. The present invention therefore considers at least two different approaches for manufacturing the optical structure 10. As a mere illustrative example, one approach is herewith explained with respect to Figure 1 and will be developed further with regard to Figure 5 and 6.

According to this exemplary method, a substrate is provided in a first step. This substate may be produced in any suitable way and comprises a negative imprint of the first element 1 together with the strut structures 4. Optionally, the substrate may also comprise negative imprints of further functional elements such as the spacer structure 6, an anti-reflective texture, etc. It is important to note that the substrate preferably comprises different regimes of structural sizes. E.g., the strut structures 4 usually comprise (structural) sizes in the micrometer scale, whereas the optional spacer structure 6 usually comprises sizes in the micrometer to millimeter scale and the optional anti-reflective structure, in particular an anti-reflective texture, comprises (structural) sizes in the nanometer scale. Yet, the substrate provides all of those functional elements as negative imprints at the same time.

In a second step, the first element 1 is printed on the substrate and in a third step, the first element 1 is removed from the substrate. Thus, a first element 1 is printed which comprises all the functional elements for which negative imprints were provided in the substrate without having to print each functional element. With regard to Figure 1, the spacer structure 6 could be produced this way or it is subsequently printed in a separate step. This could be advantageous if curing is not fully performed and the second element 2 may be bonded with the first element 1 via the spacer structure 6. The same applies for other functional elements, such as e.g. an enclosure 7, 7'.

Preferably, after printing and/or curing of the first element 1 comprising at least the integrally produced strut structures 4, the first element 1 is turned, in particular by 180°, and the second element 2 is placed upon the first element 1.

Alternatively, the first element 1 and the strut structures 4 could be produced, in particular three-dimensionally printed, in separate steps. According to the present invention, an alternative method of producing the optical element 10 would consist in manufacturing, preferably three-dimensionally printing, the first element 1 and in a subsequent step printing template structures upon the surface of the first element 100. These template structures correspond to rough templates of the strut structures 4, but with different structural sizes. Preferably, in a subsequent step, a smoothing layer is printed on at least parts of the surface, such that after printing and/or curing of the smoothing layer, the strut structures 4 in the predetermined sizes are provided at the locations of the template structures.

Other functional elements, such as an anti-reflective structure, a spacer structure 6 and/or an enclosure 7, 7', could be produced in the same way or they are printed conventionally on the first element 1 and/or the second element 2.

Preferably, the embodiment shown in Figure 1 is produced according to the last-mentioned method of the present invention.

In **Figure 2****,** a cross section of an optical structure 10 according to an advantageous embodiment of the present invention is illustrated. This embodiment is similar to the embodiment discussed in connection with **Figure 1****.** Therefore, it is generally referred to the corresponding explanations.

The embodiment of **Figure 2** differs from the embodiment of **Figure 1** in that the optical structure 10 additionally comprises an enclosure 7, 7' which is arranged around the first element 1 and the second element 2 and locks them in place by means of a positive-locking/interlocking, force-fitting and/or bonded connection. E.g., as can be seen on the left side, the fist element comprises a lateral lug 8 which form-fits with a corresponding recess of the enclosure. Additionally, although merely exemplary, the space between the upper enclosure 7' and the second element 2 is filled with a material acting as a filler and/or an adhesive. Preferably, this material is filled in the interstice via three-dimensional printing.

In **Figure 3****,** a schematic cross section of a strut structure 4 in an air gap 3 according to an advantageous embodiment of the present invention is depicted. The first element 1 and the second element 2 are not explicitly shown, only their respective surfaces 100, 200 bordering the air gap 3 are hinted at. Here, a single strut structure 4 of the plurality of strut structures 4 is exemplarily shown. The strut structures 4 may comprise substantially identical shapes and/or sizes or may differ in this regard depending on the location and/or the desired optical properties of the optical structure 10.

Three-dimensional printing is a highly precise manufacturing technique able to produce predetermined optical properties. Even very small structures such as the strut structures 4 introduce certain optical aberrations into the optical behavior of the optical structure 10. Yet, as the strut structures 4 are produced by means of three-dimensional printing, they may preferably be printed in predetermined shapes, sizes and/or locations. Thus, their impact on the optical properties may be determined in advance and their properties may e.g. be chosen such that possible aberrations are compensated.

As can be seen in **Figure 3****,** in particular the shape of the strut structure 4 may be chosen specifically. Its height h will preferably correspond to the thickness of the air gap 3, which is the shortest distance between the first element 1 and the second element at a given location. The width w of the strut structure 4, which over its entire vertical extension, i.e. along its central axis A, yields its cross section, may be chosen according to a predetermined shape. Preferably, the strut structure comprises rotationally symmetric shape with regard to the central axis A. Here, the cross section is chosen as a parabola, i.e. the strut structure 4 comprises a minimal width w at the top and a maximal width w' at the bottom, wherein the width continuously increases from the top to the bottom. Thus, in this exemplary embodiment, the strut structure 4 comprises a minimal contact surface at the interface to the second element 2, which minimizes the light loss through this surface, but at the same time has a relatively large contact surface with the first element 1.

Preferably, the surface 100 of the first element 1 and/or the surface 200 of the second element 2 comprises an anti-reflective coating and/or an anti-reflective structure in at least one region between the strut structures 4. Such an anti-reflective structure may e.g. be a textured surface wherein the surface is textured according to a predetermined pattern, wherein the size of the individual features on the surface are smaller than the wavelength of the light for which the optical structure 10 is intended.

The strut structures 4 are preferably printed using a transparent and/or translucent printing ink, preferably comprising the same optical properties as the first element 1 and/or the second element 2. It is particularly advantageous if the first element 1 is produced by means of three-dimensional printing as well. In this case, the first element 1 may integrally connected with the strut structures 4. The strut structures 4 will inherently have a certain optical power and it is hence desirable to minimize their size to minimize the resulting optical effects/aberrations. These optical aberrations are basically caused by light moving substantially perpendicularly to the air gap, i.e. through the first element 1, the air gap 3 and the second element 2, and by light moving within the air gap, e.g. from a lateral opening through the air gap and preferably through the first element 1 (or the second element 2) into the eye of a user. Since the strut structures 4 are printed with predetermined shapes and at predetermined locations, the aberrations are predictable and the aberrations may be accounted for, either by adjusting the shape, size and/or location of the strut structures, and/or by adjusting the artificial image generated e.g. by an input unit and coupled into the air gap 3.

According to the present invention, two different approaches are suggested. According to one approach, a substrate is created with any suitable means, wherein the substrate comprises on its surface a negative imprint of the first element 1 and the strut structures 4. A printing system then prints at least one type of printing ink on the substrate, thus creating (at least parts of) the first element 1 and the strut structures 4. After curing, the first element 1 may be removed from the substrate and comprises the strut structures 4 on its surface 100. The first element 1 is then preferably turned, in particular by 180°, more preferably fixed on a holder and the separately produced, in particular by means of three-dimensional printing and/or injection molding, second element 2 is placed upon the first element 1 or the strut structures 4 respectively, so that the air gap 3 is created. Even more preferably, the first element 1 and the second element 2 are then connected with each other.

By choosing substantially the same material (composition), i.e. in particular a printing ink comprising such a material (composition), for the strut structures 4 as for the first element 1 and/or the second element, optical effects at the interfaces, such as diffraction and/or refraction may be minimized. Alternatively, the printing ink for the strut structures may be chosen such that it comprises a higher glass transition temperature, in particular after curing, than the material of the first element 1 and/or the second element 2. A material with a higher glass transition temperature generally comprises a higher hardness, thus enhancing the structural integrity of the air gap 3 and consequently in particular the dimensions of the strut structures 4 may be further reduced.

The inventors have surprisingly found that it is particularly advantageous when the slope of the strut structures is chosen as small as possible. This means in particular that the difference between the width w and the width w' in the embodiment of **Figure 3** should be chosen as small as possible. In particular, best results have been found for strut structures comprising a ration between their height and their (average) width between 0.5 and 1.5.

The person skilled in the art understands that the dimensions, i.e. in particular the height and/or width of the strut structures 4 as well as their shape depends as well on the number and distribution of the strut structures 4. The further the strut structures 4 are distanced from each other, the higher and/or wider the strut structures 4 need to be and thus consequently the larger the distance d of the air gap 3 as well, in order to prevent the first element 1 and the second element 2 coming into contact.

Optionally, before arranging the second element 2 in its place, a spacer structure 6 is at least partially circumferentially printed around the predetermined circumference of the air gap 3.

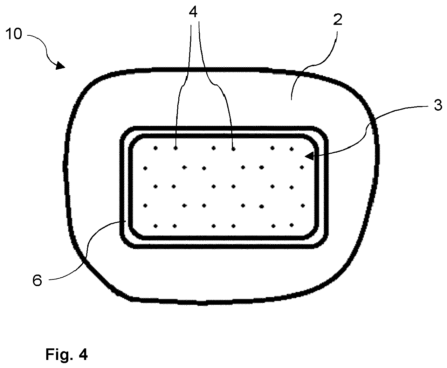

In **Figure 4****,** a schematic lateral cross section of an optical structure 10 according to an advantageous embodiment of the present invention is illustrated. In this embodiment, the optical structure 10 is a spectacle lens or at least comprises the form of the spectacle lens.

Here, a cross section is chosen which runs through the middle of and along the extension of the air gap 3. The strut structures 4 are shown. As depicted, it is preferable that the strut structures 4 comprise relatively small lateral extensions, i.e. they are in particular strut- and/or column-like structures. Optionally, as shown in **Figure 4****,** the optical structure 10 may comprise a circumferential spacer structure 6.

The human eye is highly sensitive to structured patterns. Therefore, the strut structures 4 are preferably printed at predetermined locations according to a predetermined random distribution. This means in particular that the strut structures 4 are not arranged along lines, in regular intervals and/or other kinds of patterns. More preferably, the locations for the strut structures 4 are chosen such that the light-loss within and/or through the air gap 3 is as small as possible, resulting in a minimal loss of efficiency.

In particular, for the case of a spectacle lens, such as an augmented-reality lens, it is preferable if no strut structures are arranged in a region near the pupil of a user's eye. This is usually the region in which the light forming the artificial image is coupled out of the air gap 3 into the user's eye. The person skilled in the art understands that the density and/or the distribution of the strut structures 4 needs to be adjusted accordingly if a, preferably central, region is strut-structure-free.

In **Figure 5****,** a schematical cross section of an optical structure 10 according to a further advantageous embodiment of the present invention is depicted. This embodiment shows an optical structure 10 produced according to a method of the present invention already explained with regard to **Figure 1****.** According to the present embodiment, the first element 1, the strut structures 4, a (rim-like) spacer element 6 and an enclosure 7' for keeping the second element 2, here e.g. a waveguide, in place, are integrally produced.

Preferably, this is achieved by providing a substrate comprising negative imprints of the strut structures 4, the spacer element 6 and the enclosure 7' and printing the first element 1 upon this substrate. After curing and removing the first element 1 from the substrate, it comprises as integral parts thereof the strut structures 4, the spacer element 6 and the enclosure 7'. A further optional functional element, which cannot be shown on this scale, would be an anti-reflective coating and/or an anti-reflective structure, in particular in the form of a textured surface such that it comprises anti-reflective properties. Such a textured surface is preferably also provided as a negative imprint on the substrate.

In **Figure 6****,** a schematical cross section of an optical structure 10 according to another advantageous embodiment of the present invention is depicted. The present embodiment substantially corresponds to the embodiment discussed with regard to **Figure 5****,** it is therefore generally referred to the explanations regarding that particular embodiment.

In particular, the first element 1 shown in **Figure 6** is again produced by means of three-dimensionally printing on a substrate comprising the negative imprints of functional elements. Here, these functional elements include the strut structures 4 and a spacer structure 6, which as therefore integrally part of the first element 1 after printing and removing it from the substrate. In contrast to the embodiment shown in **Figure 5****,** this embodiment of the optical structure 10 does not comprise an enclosure 7'. Instead, the second element 2 extends to the lateral outer edge of the spacer structure 6 and is preferably bonded with the spacer structure 6 and thus the first element 1.

### REFERENCE SIGN LIST

- 1: first element
- 2: second element
- 3: air gap
- 4: strut structure(s)
- 5: opening
- 6: spacer structure
- 7, 7': enclosure
- 8: lug

- 10: optical structure

- 100: surface (facing the air gap) of first element
- 200: surface (facing the air gap) of second element

- A: central axis
- d: height/vertical distance of air gap
- h: height of strut structure
- w, w': width of strut structure

## Claims

1. A three-dimensional optical structure (10), wherein the optical structure (10) comprises a first element (1), a second element (2), and an air gap (3) arranged between the first element (1) and the second element (2), **characterized in that** the first element (1) and/or the second element (2) comprises on a surface thereof (100, 200) facing the air gap (3), a plurality of three-dimensionally printed strut structures (4) for spacing the first element (1) and the second element (2) from each other.

2. An optical structure (10) according to claim 1, and any one or more of:
a) **characterized in that** the air gap (3) is substantially enclosed within the optical structure (10); or
b) **characterized in that** the air gap (3) comprises at least one lateral opening (5).

3. An optical structure (10) according to any one of the preceding claims, and any one or more of:
a) **characterized in that** the strut structures (4) are printed at predetermined locations, wherein preferably the strut structures (4) are printed according to a predetermined distribution, wherein preferably the distribution is a homogenous distribution in a predetermined region of the air gap (3); or
b) **characterized in that** the strut structures (4) are not printed according to any discernible pattern, wherein the strut structures (4) are preferably printed according to a predetermined distribution; or
c) **characterized in that** the strut structures (4) are formed integrally with the first element (1) and/or the second element (2); or
d) **characterized in that** the strut structures (4) are formed from an optically transparent material; or
e) **characterized in that** the strut structures (4) comprise a height (h) between 1 µm and 200 µm, wherein the height (h) preferably corresponds to the height (d) of the air gap; or
f) **characterized in that** the strut structures (4) comprise a height-to-width ratio between 0.2 and 3; or
g) **characterized in that** at least one strut structure (4) comprises a shape such that optical distortions caused by the strut structures (4) are minimized; or
h) **characterized in that** at least one strut structure (4) comprises a width (w) which is constant over their vertical extension (h) or wherein at least one strut structure (4) comprises a continuously varying width (w); or
i) **characterized in that** at least one strut structure (4) comprises a rotationally symmetric shape, preferably relative to a central axis (A).

4. An optical structure (10) according to any one of the preceding claims, **characterized in that** the strut structures (4) comprise the same material as the first element (1) and/or the second element (2).

5. An optical structure (10) according to any one of claims 1-3, **characterized in that** the strut structures (4) comprise a material having a higher glass transition temperature, preferably after curing, than the material of the first element (1) and/or the second element (2).

6. An optical structure (10) according to any one of the preceding claims, and any one or more of;
a) **characterized in that** the first element (1) and/or the second element (2) is produced by means of additive manufacturing, preferably three-dimensional printing and/or injection-molding; or
b) **characterized in that** the first element (1) and/or the second element (2) comprises a lens, a waveguide and/or a glass substrate; or
c) the first element (1) and/or the second element (2) comprises on its surface (100, 200) facing the air gap (3) an anti-reflective structure and/or an anti-reflective coating.

7. An optical structure (10) according to any one of the preceding claims, **characterized in that** the optical structure (1) comprises a substantially circumferential spacer structure (6) along the outer perimeter of the air gap (3) for spacing the first element (1) and the second element (2) from each other.

8. An optical structure (10) according to any one of the preceding claims, **characterized in that** the air gap (3) comprises a, preferably central, strut-structure-free region.

9. A method for producing a three-dimensional optical structure (10) according to any one of the preceding claims, wherein in a first step a substrate is provided, wherein the substrate comprises a surface being structured such as to correspond to a negative imprint of the surface (100) facing the air gap of the first element (1), wherein in a second step the first element (1) is printed on the substrate by depositing at least one layer of printing ink deposited through targeted placement of droplets of printing ink at least partially side by side and/or at least partially on top of each other, wherein in a third step the first element (1) is removed from the substrate after curing and preferably turned, in particular by 180°, wherein in a fourth step the second element (2) is placed on the first element (1) such that an air gap (3) is created by means of the strut structures (4) spacing the first element and the second element from each other.

10. A method according to claim 9, and any one or more of:
a) wherein between the third step and the fourth step an anti-reflective coating and/or at least one anti-reflective structure is printed in at least a region of the surface (100) of the first element (1); or
b) wherein the surface of the substrate is structured such that the first element (1) comprises an anti-reflective structure in at least a region of its surface (100); or
c) wherein the substrate is provided with a negative imprint of a spacer structure (6) and/or an enclosure (7, 7).

11. A method for producing a three-dimensional optical structure (10) according to any one of claims 1-8, wherein in a first step the first element (1) is produced by means of additive manufacturing, preferably by means of three-dimensional printing and/or injection-molding, wherein in a second step template structures are produced at predetermined locations on a surface (100) of the first element (1) by means of three-dimensional printing through targeted placement of droplets of printing ink, wherein the predetermined locations correspond to the locations of the strut structures (4), wherein in an optional third step at least one smoothing layer is printed at least on top of the template structures such that the strut structures (4) are formed, wherein in a fourth step the second element (2) is placed on the first element (1) such that an air gap (3) is created by means of the strut structures (4) spacing the first element (1) and the second element (2) from each other.

12. Method according to claim 11, wherein after the third step an anti-reflective coating and/or at least one anti-reflective structure is printed in at least a region of the surface (100) of the first element (1).

13. Method according to claim 11 or 12, wherein during the second step and/or in an additional step, at least one further template structure is printed such that it yields a spacer structure (6) and/or an enclosure (7, 7'), optionally after printing a smoothing layer on top of the further template structure.

14. Method according to any one of claims 9 to 13, wherein the strut structures (4) are produced at predetermined locations, preferably according to a random and/or homogenous distribution.

15. Method according to any one of claims 9 to 14, wherein before the fourth step, a substantially circumferential spacer structure (6) is printed at least partially along the outer perimeter of the air gap for spacing the first element (1) and the second element (2) from each other.
